# FASCICULE DE BREVET EUROPEEN

(11) **EP 3 313 919 B1**
(45) Date de publication et mention de la délivrance du brevet: **24.04.2019**
(21) Numéro de dépôt: 16736523.8
(22) Date de dépôt: 15.06.2016
(51) Int. Cl.: C08J 9/00, C08J 9/02, C08J 9/08, C08L 67/02

(54) **MOUSSES POLYESTER THERMODURCIES ET PROCEDE DE FABRICATION**
WÄRMEHÄRTBARE POLYESTERSCHÄUME UND HERSTELLUNGSVERFAHREN
THERMOSET POLYESTER FOAMS AND MANUFACTURING METHOD

(30) Priorité: 24.06.2015 FR 1555789
(43) Date de publication de la demande: 02.05.2018
(73) Titulaire: Saint-Gobain Isover, 92400 Courbevoie (FR)
(72) Inventeur: SAVONNET, Marie, 75018 Paris (FR); OBERT, Edouard, 60700 Fleurines (FR)
(74) Mandataire: Saint-Gobain Recherche
(86) Numéro de dépôt international: PCT/FR2016/051446
(87) Numéro de publication internationale: WO 2016/207517

(56) Documents cités:
- EP-A1- 2 628 757
- WO-A1-2010/059925

## Description

La présente invention concerne des mousses solides thermodurcies obtenues par réaction et moussage chimique d'une composition expansible contenant un composant polyol, un composant polyacide, un agent tensioactif et un catalyseur d'estérification.

Il est connu de préparer des mousses polyester thermodurcies par réaction d'un polyol et d'un polyacide.

Dans la demande WO2010/059925, un polyester hautement réticulé est obtenu en deux étapes : la première étape consiste à former un prépolymère non réticulé par réaction d'un polyol et d'un polyacide à une première température relativement peu élevée et la deuxième étape à réticuler le prépolymère soit à une deuxième température plus élevée que la première, soit à température modérée en présence d'un agent de réticulation ou d'un catalyseur de polymérisation (estérification). L'absence du catalyseur à la première étape semble être essentielle pour pouvoir mettre en oeuvre ce procédé en deux étapes.

Certains polymères durcis sont décrits comme des mousses. Leur masse volumique est toutefois relativement élevée (Exemple 12 : 350 kg/m³ ; Exemple 16 : 190 kg/m³). L'utilisation d'agents moussants physiques ou chimiques est envisagée (voir [0040]).

La demande internationale WO2012/052385 décrit un polymère expansé obtenu par réaction de glycérol et d'acide citrique à une température comprise entre 80 et 130°C jusqu'à ce que le taux de conversion soit au moins égal à 90 %, éventuellement en présence d'un catalyseur d'estérification. Lorsqu'un taux de conversion d'au moins 90 %, de préférence 98 %, est atteint, le mélange réactionnel est chauffé à une température plus élevée, voisine de 150 °C. La première étape à basse température est destinée à éviter dans la mesure du possible la décarboxylation de l'acide citrique.

Le procédé décrit dans ce document nécessite des temps réactionnels très longs, allant de plusieurs heures à plusieurs dizaines d'heures. La polymérisation est mise en oeuvre de préférence dans des moules anti-adhésifs, par exemple en Teflon. Les mousses ainsi obtenues ont une masse volumique comprises entre 200 et 850 g/litre.

La demande internationale WO2013/121033 décrit un perfectionnement de ce procédé où la polymérisation du glycérol et de l'acide citrique est mise en oeuvre au contact d'un substrat avec une couche externe comprenant au moins un métal, un oxyde métallique ou un halogénure métallique. Ce procédé fournit des mousses présentant une taille des pores plus régulière que celles préparées par le procédé décrit dans WO 2012/052385. Les masses volumiques revendiquées sont comprises entre 50 et 850 g/litre. Les mousses préparées dans les exemples selon l'invention présentent des masses volumiques comprises entre 282 g/litre et 482 g/litre.

La présente invention est basée sur la découverte que l'utilisation d'un catalyseur d'estérification et d'un agent tensioactif dans le mélange réactionnel initial contenant du glycérol et de l'acide citrique permettait d'obtenir en une seule étape de polymérisation, mise en oeuvre à haute température et en un temps limité, des mousses d'excellente qualité, ayant une masse volumique plus faible que les mousses connues et présentant une porosité fine et uniforme.

Dans le procédé de la présente invention la Demanderesse ne cherche aucunement à éviter la décomposition de l'acide citrique en acide aconitique et CO₂. Elle chauffe au contraire le mélange réactionnel rapidement à une température élevée afin d'utiliser l'acide citrique en tant qu'agent porogène chimique (agent d'expansion chimique, agent de moussage chimique) qui rend superflu l'ajout d'un agent porogène physique.

La présente invention a donc pour objet un procédé de fabrication d'une mousse polyester thermodurcie, comprenant les étapes successives suivantes :
(a) mise à disposition d'une composition expansible et thermodurcissable contenant
   - un composant polyol comprenant au moins un élément choisi parmi le glycérol, le diglycérol et les oligomères de glycérol,
   - un composant polyacide comprenant de l'acide citrique,
   - un agent tensioactif choisi parmi les alkylpolyglycosides et les mélanges d'un tensioactif anionique et d'un tensioactif cationique, et
   - un catalyseur d'estérification,
(b) introduction de la composition expansible et thermodurcissable dans un moule ou application de la composition expansible sur un support,
(c) chauffage de la composition expansible et thermodurcissable à une température au moins égale à 135 °C, de préférence au moins égale à 150 °C, encore plus préférentiellement au moins égale à 175 °C, de manière à faire réagir le composant polyol avec le composant polyacide et à former un bloc de mousse polyester thermodurcie.

L'invention a également pour objet l'utilisation d'une composition contenant
- un composant polyol comprenant au moins un élément choisi parmi le glycérol, le diglycérol et les oligomères de glycérol,
- un composant polyacide comprenant de l'acide citrique,
- un agent tensioactif choisi parmi les alkylpolyglycosides et les mélanges d'un tensioactif anionique et d'un tensioactif cationique, et
- un catalyseur d'estérification,
en tant que composition expansible et thermodurcissable pour la fabrication d'un produit isolant de type mousse.

La composition expansible thermodurcissable comprend donc quatre composants essentiels : le composant polyol, le composant polyacide, l'agent tensioactif et le catalyseur d'estérification.

Le composant polyacide peut comprendre des polyacides différents de l'acide citrique et le composant polyol peut comprendre des polyols, c'est-à-dire des composés polyhydroxylés, différents du glycérol, du diglycérol et d'oligomères de glycérol. Des exemples d'autres polyacides et polyols seront donnés ci-après.

Dans la présente demande, les quantités ou teneurs en composants polyol ou polyacide s'entendent toujours pour l'ensemble des polyols ou pour l'ensemble des polyacides présents dans la composition.

Cette définition des composants polyols et polyacides n'exclut pas la possibilité que certains tensioactifs soient considérés comme faisant partie des composants polyols ou polyacides. C'est le cas par exemple des alkylpolyglycosides (APG) qui font partie des agents tensioactifs préférés. Les alkylpolyglycosides comportent un ou plusieurs motifs de sucres (motifs polyhydroxylés) et jouent à la fois le rôle d'agent tensioactif en modulant et contrôlant la porosité des mousses obtenues, et le rôle de polyols susceptibles de participer à la formation d'un réseau tridimensionnel durci par réaction avec les groupes acide du composant polyacide.

Dans la présente invention lorsqu'un composé, présent dans la composition expansible et thermodurcissable, peut être considéré à la fois comme un premier des quatre composants essentiels *et* comme un deuxième des quatre composants essentiels de la composition (composant polyol, composant polyacide, agent tensioactif, catalyseur d'estérification) il sera considéré à la fois comme l'un et comme l'autre. Cela implique qu'il sera pris en compte dans les quantités de chacun de ces deux composants.

Ainsi, une composition expansible et thermodurcissable contenant
48 % en poids de glycérol,
47 % en poids d'acide citrique,
3 % en poids d'alkylpolyglycosides et
2 % en poids d'un catalyseur d'estérification
aura une teneur en composant polyol égale à 51 % (48 % glycérol + 3 % d'alkylpolyglycoside), une teneur en composant polyacide égale à 47 %, une teneur en agent tensioactif égale à 3 % et une teneur en catalyseur d'estérification égale à 2 %. La somme numérique de ces quatre composants est alors bien entendu supérieure à 100 % car les 3 % d'alkylpolyglycosides sont comptabilisés doublement.

Certains acides alkylphosphoniques (R-PO₄H₂ où R est une chaîne grasse) constituent un autre exemple d'un ingrédient pouvant jouer deux fonctions, à savoir le rôle d'agent tensioactif et celui de catalyseur d'estérification.

Le premier composant essentiel de la composition expansible est le composant polyol. Ce composant comprend au moins un élément choisi dans le groupe formé par le glycérol, le diglycérol et les oligoglycérols. On considère comme oligoglycérols des composés de formule

(1) HO(CH₂-CHOH-CH₂-O)ₙ-H

où n est un nombre entier compris entre 3 et 6, et les mono- ou polyéthers aliphatiques des composés de formule (1) dans lesquels jusqu'à 30 % des fonctions -OH peuvent être éthérifiées par des alcools aliphatiques.

Le composant polyol comprend de préférence, rapporté au poids sec total du composant polyol, au moins 15 % en poids, de préférence au moins 20 % en poids, en particulier au moins 25 % en poids de glycérol. La Demanderesse a en effet constaté qu'une quantité importante de glycérol monomère permet d'obtenir des mousses de faible masse volumique et de porosité uniforme.

Le composant polyol contient de préférence au plus 30 % en poids, en particulier au plus 20 % en poids et idéalement au plus 10 % en poids, rapporté au poids sec total du composant polyol, de polyols qui ne sont ni du glycérol, ni du diglycérol ni des oligomères de glycérol.

Ces polyols sont de préférence des polyols biosourcés, en particulier des sucres et alcools de sucres (sucres hydrogénés).

Les sucres utilisables en tant que partie du composant polyol peuvent être des sucres réducteurs ou des sucres non réducteurs.

On entend par sucres réducteurs les hydrates de carbone de formule C*ₙ*(H₂O)*ₚ* présentant au moins un groupe aldéhyde ou cétone (groupe réducteur). Les sucres réducteurs utilisables dans la présente invention englobent les oses (monosaccharides) et les osides (disaccharides, oligosaccharides et polysaccharides).

A titre d'exemples de monosaccharides, on peut citer ceux comportant de 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que le glucose, le mannose et le galactose.

Le lactose ou le maltose sont des exemples de disaccharides utilisables en tant que sucres réducteurs.

On pourra également utiliser de manière avantageuse des hydrolysats d'amidon obtenus par hydrolyse enzymatique ou hydrolyse acide d'amidon.

Les sucres non-réducteurs utilisables sont le saccharose et le tréhalose.

A titre d'exemples de sucres hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon.

Le deuxième composant essentiel de la composition expansible est le composant polyacide. Le composant polyacide comprend de préférence au moins 50 % en poids, en particulier au moins 65 % en poids et idéalement au moins 80 % en poids d'acide citrique, rapporté au poids total du composant polyacide.

D'autres polyacides susceptibles de réagir avec le composant polyol pour former un réseau de polyester peuvent être présents. Ces autres polyacides sont de préférence des polyacides monomères, autrement dit des polyacides qui ne sont pas formés par polymérisation de motifs monomères portant des groupes acide tels que le poly(acide acrylique).

Les autres polyacides sont de préférence des acides polycarboxyliques, par exemple des acides dicarboxyliques, tricarboxyliques ou tétracarboxyliques.

Les acides dicarboxyliques englobent, par exemple, l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique ;

Les acides tricarboxyliques englobent, par exemple, l'acide tricarballylique, l'acide 1,2,4-butanetricarboxylique, l'acide aconitique, l'acide hémimellitique, l'acide triméllitique et l'acide trimésique ;

On peut citer comme acide tétracarboxylique, par exemple l'acide 1,2,3,4-butane-tétracarboxylique et l'acide pyroméllitique.

Les composants polyol et polyacide tels que définis ci-dessus représentent, ensemble, au moins 60 %, de préférence au moins 70 % et en particulier au moins 80 % du poids sec de la composition expansible et thermodurcissable.

Le composant polyol représente de préférence de 15 à 60 % en poids, en particulier de 20 à 50 % en poids et idéalement de 25 à 45 % en poids du poids total des composants polyol et polyacide. Il en découle logiquement que le composant polyacide représente de préférence de 40 à 85 % en poids, en particulier de 50 à 80 % en poids, et idéalement de 55 à 75 % en poids du poids total des composants polyol et polyacide.

De manière connue, on ajustera les quantités respectives des composants polyol et polyacide de manière à ce que les fonctions -OH et les fonctions -COOH soient présentes en un rapport molaire compris entre 0,65 et 1,5, de préférence entre 0,8 et 1,4, en particulier entre 1,0 et 1,3.

Le troisième composant essentiel de la composition expansible et thermodurcissable est un agent tensioactif. Dans la présente demande ce terme englobe également des mélanges de plusieurs agents tensioactifs.

La fonction de cet ingrédient est d'améliorer la qualité de la mousse, c'est-à-dire de réduire la taille des pores, de resserrer la distribution de la taille des pores et de réduire la masse volumique des mousses durcies obtenues.

L'agent tensioactif présente de préférence une balance hydrophile/lipophile (HLB) comprise entre 3 et 13, de préférence entre 5 et 8.

Dans un mode de réalisation, l'agent tensioactif est un mélange d'un tensioactif anionique et d'un tensioactif cationique. Dans le domaine des mousses aqueuses liquides, il est connu qu'une association de deux types d'agents tensioactifs de charges opposées permet de stabiliser le film de tensioactifs à l'interface eau/air en réduisant la répulsion entre molécules de même charge. Comme il sera montré ci-après dans les exemples, la Demanderesse a obtenu d'excellents résultats avec un mélange de dodécylsulfate de sodium (SDS) et de bromure de tétradécyltriméthyl ammonium (TTAB) et l'utilisation d'une association de ces deux agents tensioactifs constitue donc un mode de réalisation préféré. Le rapport en poids TTAB/SDS est de préférence compris entre 1,5 et 2,5, en particulier entre 1,8 et 2,2 et idéalement proche de 2.

Les agents tensioactifs non-ioniques constituent une alternative intéressante à l'association d'un tensioactif anionique et d'un tensioactif cationique. En effet, pour les agents tensioactifs non-ioniques, il n'existe pas de forces de répulsion entre têtes hydrophiles de même charge et certains tensioactifs non-ioniques sont de ce fait particulièrement appropriés pour la formation de mousses de bonne qualité. Les agents tensioactifs non-ioniques utilisés dans la présente invention ont de préférence une HLB comprise entre 3 et 13.

C'est le cas par exemple des alkylpolyglycosides (APG) qui sont des molécules comportant une tête hydrophile formée d'un ou de plusieurs motifs de sucre, greffée de chaîne grasse alkyle.

Les alkylpolyglycosides comportent de préférence entre 1 et 2 motifs glucoside et les chaînes alkyle comportent de préférence de 8 à 14 atomes de carbone et sont de préférence des chaînes alkyle linéaires.

On peut citer à titre d'exemples d'alkylpolyglycosides les produits de la marque Glucopon, notamment le Glucopon 600 CSUP (lauryl glucoside) et le Glucopon 650 EC (coco glucoside).

La quantité de l'agent tensioactif représente avantageusement de 0,1 à 10 %, de préférence de 1 à 8 % et en particulier de 2 à 6 % du poids sec total de la composition expansible.

Le quatrième ingrédient essentiel de la composition expansible et thermodurcissable utilisée dans le procédé de la présente invention est un catalyseur d'estérification. Ce catalyseur est de préférence, mais pas nécessairement, un composé contenant du phosphore. On peut citer à titre d'exemples de catalyseurs phosphorés préférés ceux choisis dans le groupe constitué de hypophosphite de métal alcalin (H₂PO₂M), phosphite de métal alcalin (HPO₃M₂), polyphosphate de métal alcalin (m₃PO₄), hydrogénophosphate de métal alcalin (M₂HPO₄), acide phosphorique (H₃PO₄), acide alkylphosphonique (RPO₃H₂) et un mélange de deux ou plusieurs de ces composés. L'hypophosphite de métal alcalin est particulièrement préféré.

La concentration du catalyseur d'estérification est typiquement comprise entre 0,1 et 10 % en poids, de préférence entre 1 et 8 % en poids, et en particulier de 2 à 6 % en poids, rapporté au poids sec de la composition expansible.

Le mélange des quatre composants essentiels décrits ci-dessus est avantageusement une solution. Pour obtenir la dissolution de l'ensemble des ingrédients il peut être utile d'ajouter une certaine quantité d'eau. L'eau peut également servir à fluidifier la composition afin de faciliter son écoulement ou son étalement au cours de l'étape (b) du procédé de l'invention. On cherchera toutefois généralement à limiter la quantité d'eau dans la composition expansible car la réaction d'estérification ne débutera qu'après évaporation complète de l'eau et l'évaporation de l'eau présente un coût énergétique indésirable.

La composition expansible contiendra donc avantageusement au plus 60 % en poids, de préférence au plus 25 % en poids, plus préférentiellement au plus 15 % en poids et en particulier au plus 5 % en poids d'eau, rapporté au poids total de la composition expansible.

La composition expansible utilisée dans la présente invention peut contenir en outre jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

Enfin, la composition expansible peut contenir un ou plusieurs autres additifs utilisés classiquement dans l'industrie de la mise en oeuvre et transformation des polymères tels que des colorants, pigments, agents anti-bactériens ou anti-fongiques, agents ignifugeants, absorbeurs UV, agents hydrophobes. Ces additifs représentent au total de préférence au plus 10 % du poids sec de la composition.

Bien que la composition expansible puisse contenir, en principe, un agent d'expansion organique tel que le pentane, il est important de noter qu'il n'est pas nécessaire d'en ajouter.

En effet, l'acide citrique, présent dans le composant polyacide, joue le rôle d'agent d'expansion. Lorsque la composition expansible est chauffée, à l'étape (c), à une température proche de 175 °C, l'acide citrique se décompose, de manière connue, en acide aconitique et CO₂ (M. M. Barbooti et al. « Thermal Decomposition of Citric Acid », Thermochimica Acta, 98 (1986), 119-126 ; D. Wyrzykowski et al. "Thermal Behavior of Citric Acid and Isomeric Aconitic Acids", J. Therm. Anal. Calorim. (2001), 104 :731-735). Il sera montré ci-après dans les exemples de réalisation que des mousses de bonne qualité et de faible masse volumique peuvent être obtenues en l'absence de tout agent d'expansion physique. Lorsque l'étape (c) est mise en oeuvre à une température supérieure à 170 °C, l'ajout d'un agent d'expansion organique est donc superflu. Dans un mode de réalisation préféré du procédé de la présente invention, la composition expansible est donc essentiellement exempte d'agent d'expansion physique organique.

Lorsque la composition expansible est étalée sous forme d'un film continu sur un support, l'épaisseur du film, avant chauffage, c'est-à-dire avant expansion et durcissement, est avantageusement au moins égale à 1 mm, de préférence au moins égale à 2 mm, en particulier au moins égale à 5 mm, et plus préférentiellement au moins égale à 10 mm.

Le volume du bloc de mousse formé peut varier entre de très larges limites. Lorsque la composition expansible est utilisée dans un procédé continu formant par exemple des bandes ou profilés de matériaux isolants, il est potentiellement infini. Lorsque la composition expansible est utilisée pour former des blocs discrets, par exemple des plaques ou feuilles de mousses, sa quantité est de préférence telle que le volume de chaque bloc de mousse solide thermodurcie soit au moins égal à 500 cm³, de préférence au moins égal à 0,001 m³, en particulier au moins égal à 0,01 m³.

Le bloc de mousse se présente de préférence sous forme d'une plaque.

Pour chauffer la composition expansible à l'étape (c) on pourra utiliser en principe n'importe quel moyen usuel connu dans le domaine de la mise en oeuvre et transformation des polymères, tels que l'air chaud, le rayonnement thermique, les micro-ondes ou la mise en contact avec un support chaud (moule).

Bien entendu, la température du moyen de chauffage (étuve, support, moule) pourra être supérieure à la température réactionnelle mentionnée ci-dessus, par exemple comprise entre 160 et 210 °C.

La durée de l'étape de chauffage (étape (c)) dépend non seulement de la température, mais également du moyen de chauffage et du rapport volume/surface du bloc de mousse formé. Elle est généralement comprise entre 10 minutes et 5 heures, de préférence entre 20 minutes et 4 heures et en particulier entre 30 minutes et 3 heures.

La présente invention a également pour objet une mousse polyester solide susceptible d'être obtenue par le procédé objet de la présente invention.

En l'absence de colorants ajoutés, les mousses solides préparées par le procédé de l'invention sont généralement de couleur claire, typiquement de couleur ivoire, jaune ou beige. Leur masse volumique est comprise entre 20 et 80 kg/m³, de préférence entre 25 et 50 kg/m³, en particulier entre 27 et 48 kg/m³.

Elles présentent une porosité fermée avec un diamètre moyen des pores, déterminé par tomographie à rayons X, compris entre 100 et 800 µm.

### Exemples

On prépare plusieurs compositions expansibles thermodurcissables en ajoutant de l'acide citrique en poudre à une solution aqueuse contenant le glycérol, diglycérol, oligoglycérol ou mélange de ceux-ci. On ajoute ensuite le catalyseur d'estérification (hypophosphite de sodium monohydraté) sous forme de poudre, puis l'agent tensioactif, et on ajuste l'extrait sec du mélange à 66% en poids. On agite le mélange à température ambiante jusqu'à dissolution de la poudre d'acide citrique. Le Tableau 1 indique les quantités respectives des ingrédients utilisés, exprimées en matières sèches, ainsi que l'extrait sec total des compositions obtenues.

La solution réactive est ensuite versée dans des moules rectangulaires dont le fond est couvert d'une feuille d'aluminium. L'épaisseur du film liquide est d'environ 1 mm. Les moules sont chauffés pendant 3 heures dans une étuve ventilée thermostatée à 180°C.

Après sortie des moules de l'étuve et refroidissement des mousses formées jusqu'à température ambiante, on évalue l'épaisseur de la mousse formée à l'aide de l'échelle de notation suivante :
- : moins de 0,5 cm
+ : 0,5 à 1 cm
++ : 1,1 à 2 cm
+++ : 2,1 à 3 cm
++++ : 3,1 à 4 cm
+++++ : plus de 4 cm

**Tableau 1**

| Polyol | Polyacide | Catalyseur | Tensio-actif | Extrait sec | Epaisseur de la mousse |
|---|---|---|---|---|---|
| 34 parts glycérol | 66 parts acide citrique | 5 parts HPS* | 5,1 parts TTAB/SDS** | 66 % | +++++ |
| 42 parts d'un mélange glycérol & diglycérol & oligo-glycérol*** | 58 parts acide citrique | 5 parts HPS* | 5,1 parts TTAB/SDS** | 66 % | +++++ |
| 41 parts de diglycérol | 59 parts d'acide citrique | 5 parts HPS* | 5,1 parts TTAB/SDS** | 66 % | +++ |
| 41 parts d'oligoglycérol**** | 59 parts d'acide citrique | 5 parts HPS* | 5,1 parts TTAB/SDS** | 66 % | ++ |
| 34 parts de glycérol | 66 parts d'acide citrique | 5 parts HPS* | 2,55 parts TTAB/SDS** | 66 % | +++++ |
| 34 parts de glycérol | 66 parts d'acide citrique | 5 parts HPS* | 5 parts d'alkyl(C₈-C₁₄)-polyglycoside | 66% | +++++ |
| 34 parts de glycérol | 66 parts d'acide citrique | 5 parts HPS* | 2,5 parts d'alkyl(C₈-C₁₄)-polyglycoside + 2,55 parts TTAB/SDS** | 66 % | +++++ |
| 34 parts de glycérol | 66 parts d'acide citrique | 10 parts HPS* | d'alkyl(C₈-C₁₄)-polyglycoside + 2,55 parts TTAB/SDS** | 66 % | +++++ |
| 42 parts d'un mélange glycérol & diglycérol & oligo-glycérol*** | 58 parts d'acide citrique | 5 parts HPS* | 2,5 parts d'alkyl(C₈-C₁₄)-polyglycoside | 66% | +++ |
| 42 parts d'un mélange glycérol & diglycérol & oligo-glycérol*** | 58 parts d'acide citrique | 5 parts HPS* | 3,75 parts d'alkyl(C₈-C₁₄)-polyglycoside | 66% | +++++ |
| 42 parts d'un mélange glycérol & diglycérol & oligo-glycérol*** | 58 parts d'acide citrique | 5 parts HPS* | 5 parts d'alkyl(C₁₂-C₁₄)-polyglycoside | 66% | +++++ |
| 42 parts d'un mélange glycérol & diglycérol & oligo-glycérol*** | 58 parts d'acide citrique | 5 parts HPS* | 7,5 parts d'alkyl(C₁₂-C₁₄)-polyglycoside | 66% | +++++ |
| 42 parts d'un mélange glycérol & diglycérol & oligo-glycérol*** | 58 parts d'acide citrique | 5 parts HPS* | 7,65 parts TTAB/SDS** | 66 % | +++++ |
| 42 parts d'un mélange glycérol & diglycérol & oligo-glycérol*** | 58 parts d'acide citrique | 5 parts HPS* | 10,2 parts TTAB/SDS** | 66 % | +++++ |

| | | | | | |
|---|---|---|---|---|---|
| * Hypophosphite de sodium hydraté ** bromure de tétradécyltriméthyl ammonium (TTAB) et dodécylsulfate de sodium (SDS) ajoutés sous forme de solution à 25 % dans l'eau ; rapport en poids TTAB/SDS = 2 *** mélange contenant environ un tiers de chacun des composants ****polygycérol-4 (CAS n° 25618-55-7) contient environ 2% de diglycérol, 43% de triglycérol, 34% de tétraglycérol, 14 % de pentaglycérol, 6 % d'hexaglycérol | | | | | |

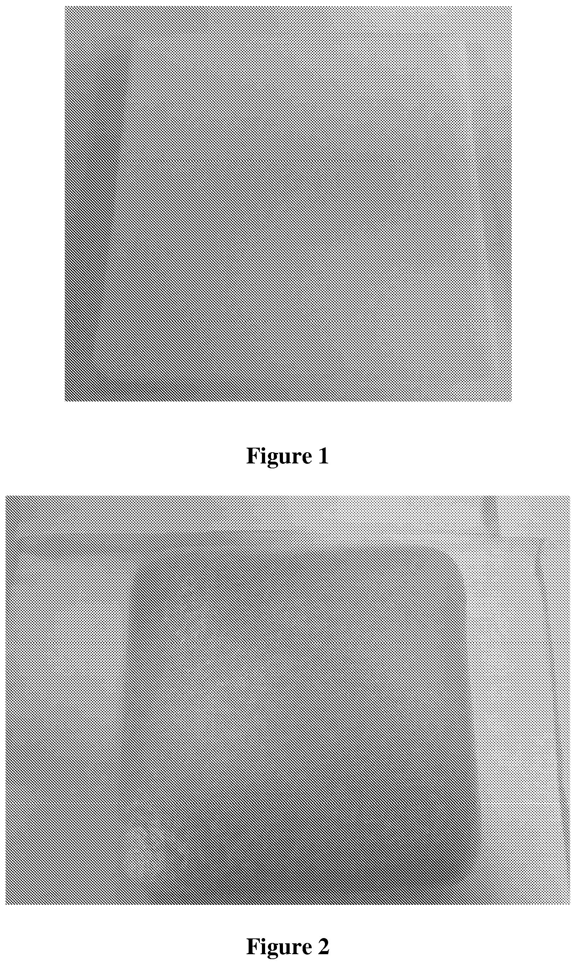

Les mousses obtenues ont toutes une structure poreuse fine et régulière. Elles sont de couleur ivoire ou beige. Les Figures 1 et 2 montrent à titre d'exemple respectivement une plaque et un bloc de mousse obtenus. Ces essais montrent que l'utilisation conjointe d'un catalyseur d'estérification (hypophosphite de sodium) et d'un agent tensioactif (association tensioactif cationique et anionique) permet d'obtenir des mousses en une seule étape à haute température.

L'essai utilisant du polyglycérol-4 comme composant polyol semble indiquer que le moussage est inhibé par l'absence de glycérol monomère et la quasi absence de dimère. La présence d'une certaine quantité de glycérol monomère et/ou dimère semble être importante pour le moussage.

Les alkylpolyglycosides (agents tensioactifs neutres) donnent des résultats comparables à l'association TTAB/SDS.

La Demanderesse a réalisé des essais avec un agent tensioactif anionique (Disponil® SUS 87 Spez. ; sel disodique d'un ester d'alcool décylique éthoxylé), mais ce tensioactif utilisé en l'absence d'un tensioactif cationique ne permet pas l'obtention d'une mousse.

L'utilisation d'un agent tensioactif non-ionique ayant une HLB de 14 (Disponil® PGE 110 ; diéther polyglycolique d'un diol aliphatique) n'aboutit pas non plus à l'obtention d'une mousse.

### Remplacement d'une partie du glycérol par d'autres polyols

Le Tableau 2 ci-dessous montre les résultats obtenus par des essais réalisés dans les mêmes conditions que celles du Tableau 1. Environ un tiers du glycérol/diglycérol/oligoglycérol a été remplacé par un polyol différent (amidon hydrophobe, triméthylolpropane, pentaérythritol).

**Tableau 2**

| Polyol | Polyacide | Catalyseur | Tensio-actif | Extrait sec | Epaisseur de la mousse |
|---|---|---|---|---|---|
| 24 parts de glycérol + 10 parts d'amidon hydrophobe | 66 parts d'acide citrique | 5 parts HPS* | 5,1 parts TTAB/SDS** | 66% | +++++ |
| 24 parts de glycérol + 10 parts de triméthylolpropane | 66 parts d'acide citrique | 5 parts HPS* | 5,1 parts TTAB/SDS** | 66% | +++++ |
| 24 parts de glycérol + 10 parts de pentaérythritol | 66 parts d'acide citrique | 5 parts HPS* | 5,1 parts TTAB/SDS** | 66% | +++++ |

| | | | | | |
|---|---|---|---|---|---|
| * Hypophosphite de sodium hydraté ** bromure de tétradécyltriméthyl ammonium (TTAB) et dodécylsulfate de sodium (SDS) ajoutés sous forme de solution à 25 % dans l'eau ; rapport en poids TTAB/SDS = 2 | | | | | |

On peut constater que ce remplacement partiel du glycérol ou d'oligomères de celui-ci n'altère en rien la qualité des mousses formées.

### Remplacement total de glycérol par d'autres polyols

Le Tableau 3 ci-dessous montre les résultats obtenus par des essais réalisés dans les mêmes conditions que celles du Tableau 1, à ceci près que la totalité du glycérol/diglycérol/oligoglycérol a été remplacée par un polyol différent (amidon hydrophobe, maltitol, isosorbide).

**Tableau 3**

| Polyol | Polyacide | Catalyseur | Tensio-actif | Extrait sec | Epaisseur de la mousse |
|---|---|---|---|---|---|
| 34 parts EmCap®*** | 66 parts acide citrique | 5 parts HPS* | 5,1 parts TTAB/SDS** | 66% | - |
| 48 parts de maltitol | 52 parts acide citrique | 5 parts HPS* | 5,1 parts TTAB/SDS** | 66% | - |
| 54 parts d'isosorbide | 46 parts d'acide citrique | 5 parts HPS* | 5,1 parts TTAB/SDS** | 66% | - |

| | | | | | |
|---|---|---|---|---|---|
| *Hypophosphite de sodium hydraté ** bromure de tétradécyltriméthyl ammonium (TTAB) et dodécylsulfate de sodium (SDS) ajoutés sous forme de solution à 25 % dans l'eau ; rapport en poids TTAB/SDS = 2 *** Amidon modifié hydrophobe | | | | | |

On constate que le remplacement total du glycérol ou d'oligomères de celui-ci empêche la formation de mousses. La présence de glycérol, diglycérol ou d'oligoglycérol s'avère donc indispensable à la formation de mousses.

### Remplacement d'une partie ou de la totalité de l'acide citrique par un autre polyacide

Le Tableau 4 ci-dessous montre les résultats obtenus par des essais réalisés dans les mêmes conditions que celles du Tableau 1 à ceci près qu'une partie ou la totalité de l'acide citrique a été remplacé par un autre polyacide.

**Tableau 4**

| Polyol | Polyacide | Catalyseur | Tensio-actif | Extrait sec | Epaisseur mousse |
|---|---|---|---|---|---|
| 42 parts d'un mélange glycérol & diglycérol & oligo-glycérol | 58 parts d'acide trycarbalylique | 5 parts HPS* | 5 parts APG*** | 66 % | - |
| 42 parts d'un mélange glycérol & diglycérol & oligo-glycérol | 58 parts d'acide 1,2,3,4-tetrabutyl-carboxylique | 5 parts HPS* | 5 parts APG*** | 66 % | - |
| 42 parts d'un mélange glycérol & diglycérol & oligo-glycérol | 58 parts d'acide itaconique | 5 parts HPS* | 5 parts APG*** | 66 % | - |
| 34 parts de glycérol | 56 parts d'acide citrique + 10 parts d'acide 1,2,3,4-tetrabutyl-carboxylique | 5 parts HPS* | 5,1 parts TTAB/SDS** | 66% | +++++ |
| 34 parts de glycérol | 56 parts d'acide citrique + 10 parts d'acide nonadioïque | 5 parts HPS* | 5,1 parts TTAB/SDS** | 66 % | +++++ |

| | | | | | |
|---|---|---|---|---|---|
| * Hypophosphite de sodium **bromure de tétradécyltriméthyl ammonium (TTAB) et dodécylsulfate de sodium (SDS) ajoutés sous forme de solution à 25% dans l'eau ; rapport en poids TTAB/SDS = 2 *** Alkyl(C₈-C₁₄)-polyglycoside (Glucopon 650 EC) ajouté sous forme d'une solution aqueuse à 52 % en poids d'extrait sec | | | | | |

On constate que le remplacement total de l'acide citrique par d'autres polyacides empêche la formation de mousses. Le remplacement partiel de l'acide citrique ne nuit pas à la qualité des mousses.

### Catalyseur d'estérification

Lorsqu'on réalise un essai dans les mêmes conditions que celles du Tableau 1 mais en omettant l'hypophosphite de sodium, la formation de mousse est très fortement inhibée.

**Tableau 5**

| Polyol | Polyacide | Catalyseur | Tensio-actif | Extrait sec | Epaisseur mousse |
|---|---|---|---|---|---|
| 34 parts de glycérol | 66 parts d'acide citrique | - | 5,1 parts TTAB/SDS* | 66% | + |

| | | | | | |
|---|---|---|---|---|---|
| * bromure de tétradécyltriméthyl ammonium (TTAB) et dodécylsulfate de sodium (SDS) ajoutés sous forme de solution à 25 % dans l'eau ; rapport en poids TTAB/SDS = 2 | | | | | |

Des essais d'analyse thermogravimétrique (ATG) d'une solution aqueuse d'acide citrique contenant de l'hypophosphite de sodium en comparaison d'une solution identique exempte d'hypophosphite de sodium ont montré que l'hypophosphite de sodium catalyse la décomposition de l'acide citrique en acide aconitique et CO₂.

## Revendications

1. Procédé de fabrication d'une mousse polyester thermodurcie, comprenant les étapes successives suivantes :
(a) mise à disposition d'une composition expansible et thermodurcissable contenant
- un composant polyol comprenant au moins un élément choisi parmi le glycérol, le diglycérol et les oligomères de glycérol,
- un composant polyacide comprenant de l'acide citrique,
- un agent tensioactif choisi parmi les alkylpolyglycosides et les mélanges d'un tensioactif anionique et d'un tensioactif cationique, et
- un catalyseur d'estérification,
(b) introduction de la composition expansible et thermodurcissable dans un moule ou application de la composition expansible sur un support,
(c) chauffage de la composition expansible et thermodurcissable à une température au moins égale à 135 °C, de préférence au moins égale à 150 °C, de manière à faire réagir le composant polyol avec le composant polyacide et à former un bloc de mousse polyester thermodurcie.

2. Procédé selon la revendication 1, **caractérisé par le fait que** le composant polyol et le composant polyacide représentent ensemble au moins 60 %, de préférence au moins 70 % et en particulier au moins 80 % du poids sec de la composition expansible et thermodurcissable.

3. Procédé selon la revendication 1 ou 2, **caractérisé par le fait que** le composant polyol comprend au moins 15 % en poids, de préférence au moins 20 % en poids, en particulier au moins 25 % en poids de glycérol.

4. Procédé selon l'une des revendications précédentes, **caractérisé par le fait que** le composant polyacide comprend au moins 50 % en poids, de préférence au moins 65 % en poids et en particulier au moins 80 % en poids d'acide citrique.

5. Procédé selon l'une quelconque des revendications précédentes, **caractérisé par le fait que** l'agent tensioactif est un mélange de dodécylsulfate de sodium (SDS) et de bromure de tétradécyltriméthyl ammonium (TTAB).

6. Procédé selon l'une quelconque des revendications 1 à 5, **caractérisé par le fait que** l'agent tensioactif présente une balance hydrophile/lipophile (HLB) comprise entre 3 et 13.

7. Procédé selon l'une quelconque des revendications précédentes, **caractérisé par le fait que** le composant polyol représente de 15 à 60 % en poids, de préférence de 20 à 50 % en poids et en particulier de 25 à 45 % en poids du poids total des composants polyol et polyacide.

8. Procédé selon l'une quelconque des revendications précédentes, **caractérisé par le fait que** la composition expansible contient au plus 60 % en poids, de préférence au plus 25 % en poids, plus préférentiellement au plus 15 % en poids et en particulier au plus 5 % en poids d'eau.

9. Procédé selon l'une quelconque des revendications précédentes, **caractérisé par le fait que** le catalyseur d'estérification est choisi parmi les composés contenant du phosphore, de préférence dans le groupe constitué de hypophosphite de métal alcalin, phosphite de métal alcalin, polyphosphate de métal alcalin, hydrogénophosphate de métal alcalin, acide phosphorique, acide alkylphosphonique et un mélange de deux ou plusieurs de ces composés, en particulier l'hypophosphite de métal alcalin.

10. Procédé selon l'une quelconque des revendications précédentes, **caractérisé par le fait que** la composition expansible contient en outre jusqu'à 30 % en poids, de préférence jusqu'à 20 % en poids, en particulier jusqu'à 10 % en poids, rapportés au poids sec de la composition expansible totale, d'une ou plusieurs charges minérales ou organiques.

11. Mousse polyester susceptible d'être obtenue par le procédé selon l'une quelconque des revendications précédentes.

12. Mousse polyester selon la revendication 11, **caractérisée par le fait qu'**elle présente une masse volumique comprise entre 20 et 80 kg/m³, de préférence entre 25 et 50 kg/m³, en particulier entre 27 et 48 kg/m³.

13. Mousse polyester selon la revendication 11 ou 12, **caractérisée par le fait qu'**elle présente une porosité fermée.

14. Mousse solide selon l'une des revendications 11 à 13, **caractérisée par le fait que** le diamètre moyen des pores déterminé par tomographie à rayons X est compris entre 100 et 800 µm.

15. Utilisation d'une composition contenant
- un composant polyol comprenant au moins un élément choisi parmi le glycérol, le diglycérol et les oligomères de glycérol,
- un composant polyacide comprenant de l'acide citrique,
- un agent tensioactif choisi parmi les alkylpolyglycosides et les mélanges d'un tensioactif anionique et d'un tensioactif cationique, et
- un catalyseur d'estérification,
en tant que composition expansible et thermodurcissable pour la fabrication d'un produit isolant de type mousse.

## Patentansprüche

1. Verfahren zur Herstellung eines thermogehärteten Polyester-Schaumstoffs, das die folgenden aufeinanderfolgenden Schritte umfasst:
(a) Bereitstellen einer schäumbaren und wärmehärtbaren Zusammensetzung, enthaltend:
- eine Polyolkomponente, bestehend aus mindestens einem Element, das unter Glycerin, Diglycerin und Glycerin-Oligomeren ausgewählt wurde,
- eine mehrbasige Zitronensäure enthaltende Säurekomponente ,
- ein oberflächenaktiver Stoff, ausgewählt aus Alkylpolyglykosiden und Mischungen eines anionischen Tensids mit einem kationischen Tensid und
- ein Veresterungskatalysator,
(b) Einbringen der schäumbaren und wärmehärtbaren Zusammensetzung in eine Form oder Aufbringen der schäumbaren Zusammensetzung auf einen Träger,
(c) Erwärmen der schäumbaren und wärmehärtbaren Zusammensetzung auf eine Temperatur von mindestens 135 °C, vorzugsweise von mindestens 150 °C, sodass die Polyolkomponente mit der mehrbasigen Säurekomponente reagiert und einen wärmegehärteten Polyester-Schaumstoffblock bildet.

2. Verfahren nach Anspruch 1, **dadurch gekennzeichnet, dass** die Polyolkomponente und die mehrbasige Säurekomponente gemeinsam mindestens 60 Gew.-%, vorzugsweise mindestens 70 Gew.-% und insbesondere mindestens 80 Gew.-% des Trockengewichts der schäumbaren und wärmehärtbaren Zusammensetzung darstellen.

3. Verfahren nach Anspruch 1 oder 2, **dadurch gekennzeichnet, dass** die Polyolkomponente mindestens 15 Gew.-%, vorzugsweise mindestens 20 Gew.-% und insbesondere mindestens 25 Gew.-% Glycerin enthält.

4. Verfahren nach einem der vorangehenden Ansprüche, **dadurch gekennzeichnet, dass** die mehrbasige Säurekomponente mindestens 50 Gew.-%, vorzugsweise mindestens 65 Gew.-% und insbesondere mindestens 80 Gew.-% Zitronensäure enthält.

5. Verfahren nach einem der vorangehenden Ansprüche, **dadurch gekennzeichnet, dass** der oberflächenaktive Stoff eine Mischung aus Natriumlaurylsulfat (NLS) und Tetradecyltrimethylammoniumbromid (TTAB) ist.

6. Verfahren nach einem der Ansprüche 1 bis 5, **dadurch gekennzeichnet, dass** der oberflächenaktive Stoff ein hydrophiles/lipophiles Gleichgewicht (HLB) zwischen 3 und 13 aufweist.

7. Verfahren nach einem der vorangehenden Ansprüche, **dadurch gekennzeichnet, dass** die Polyolkomponente zwischen 15 - 60 Gew.-%, vorzugsweise zwischen 20 bis 50 Gew.-% und insbesondere zwischen 25 bis 45 Gew.-% des Gesamtgewichts aus Polyol- und mehrbasigen Säurekomponenten darstellt.

8. Verfahren nach einem der vorhergehenden Ansprüche, **dadurch gekennzeichnet, dass** die schäumbare Zusammensetzung höchstens 60 Gew.-%, vorzugsweise höchstens 25 Gew.-%, stärker bevorzugt höchstens 15 Gew.-% und insbesondere höchstens 5 Gew.-% Wasser enthält.

9. Verfahren nach einem der vorhergehenden Ansprüche, **dadurch gekennzeichnet, dass** der Veresterungskatalysator unter den Verbindungen ausgewählt wird, die Phosphor enthalten, vorzugsweise aus der Gruppe bestehend aus Alkalihypophosphiten, Alkaliphosphiten, Alkalipolyphosphaten, Alkalihydrogenphosphaten, Phosphorsäure, Alkylphosphonsäure und einer Mischung von zwei oder mehrerer dieser Verbindungen, insbesondere Alkalihypophosphiten.

10. Verfahren nach einem der vorhergehenden Ansprüche, **dadurch gekennzeichnet, dass** die schäumbare Zusammensetzung außerdem bis zu 30 Gew.-%, vorzugsweise bis zu 20 Gew.-% und insbesondere bis zu 10 Gew.-% bezogen auf das Trockengewicht der gesamten schäumbaren Zusammensetzung, eines oder mehrerer mineralischer oder organischer Füllstoffe enthält.

11. Polyester-Schaumstoff, der durch das Verfahren nach einem der vorhergehenden Ansprüche erhalten werden kann.

12. Polyester-Schaumstoff nach Anspruch 11, **dadurch gekennzeichnet, dass** er eine Dichte zwischen 20 bis 80 kg/m³, vorzugsweise zwischen 25 bis 50 kg/m³ und insbesondere zwischen 27 und 48 kg/m³ hat.

13. Polyester-Schaumstoff nach Anspruch 11 oder 12, **dadurch gekennzeichnet, dass** er eine geschlossene Porosität aufweist.

14. Hartschaumstoff nach einem der Ansprüche 11 bis 13, **dadurch gekennzeichnet, dass** der durch Röntgentomographie bestimmte mittlere Porendurchmesser zwischen 100 und 800 µm liegt.

15. Verwendung einer Zusammensetzung, enthaltend:
- eine Polyolkomponente, bestehend aus mindestens einem Element, das unter Glycerin, Diglycerin und Glycerin-Oligomeren ausgewählt wurde,
- eine mehrbasige Zitronensäure enthaltende Säurekomponente,
- ein oberflächenaktiver Stoff, ausgewählt aus Alkylpolyglykosiden und Mischungen eines anionischen Tensids mit einem kationischen Tensid und
- ein Veresterungskatalysator,
als schäumbare und wärmehärtbare Zusammensetzung für die Herstellung eines Dämmprodukts vom Schaumstofftyp.

## Claims

1. A process for manufacturing a thermoset polyester foam, comprising the following successive steps:
(a) providing an expandable and thermosetting composition containing
- a polyol component comprising at least one element selected from glycerol, diglycerol and glycerol oligomers,
- a polyacid component comprising citric acid,
- a surfactant selected from alkyl polyglycosides and the mixtures of an anionic surfactant and a cationic surfactant, and
- an esterification catalyst,
(b) introducing the expandable and thermosetting composition into a mold or applying the expandable composition to a support,
(c) heating the expandable and thermosetting composition at a temperature at least equal to 135°C, preferably at least equal to 150°C, so as to react the polyol component with the polyacid component and form a block of thermoset polyester foam.

2. The process as claimed in claim 1, **characterized in that** the polyol component and the polyacid component represent together at least 60%, preferably at least 70% and in particular at least 80% of the dry weight of the expandable and thermosetting composition.

3. The process as claimed in claim 1 or 2, **characterized in that** the polyol component comprises at least 15% by weight, preferably at least 20% by weight, in particular at least 25% by weight of glycerol.

4. The process as claimed in one of the preceding claims, **characterized in that** the polyacid component comprises at least 50% by weight, preferably at least 65% by weight and in particular at least 80% by weight of citric acid.

5. The process as claimed in any one of the preceding claims, **characterized in that** the surfactant is a mixture of sodium dodecyl sulfate (SDS) and tetradecyltrimethylammonium bromide (TTAB).

6. The process as claimed in any one of claims 1 to 5, **characterized in that** the surfactant has a hydrophilic-lipophilic balance (HLB) of between 3 and 13.

7. The process as claimed in any one of the preceding claims, **characterized in that** the polyol component represents from 15% to 60% by weight, preferably from 20% to 50% by weight and in particular from 25% to 45% by weight of the total weight of the polyol and polyacid components.

8. The process as claimed in any one of the preceding claims, **characterized in that** the expandable composition contains at most 60% by weight, preferably at most 25% by weight, more preferentially at most 15% by weight and in particular at most 5% by weight of water.

9. The process as claimed in any one of the preceding claims, **characterized in that** the esterification catalyst is selected from phosphorus-containing compounds, preferably from the group consisting of alkali metal hypophosphite, alkali metal phosphite, alkali metal polyphosphate, alkali metal hydrogen phosphate, phosphoric acid, alkylphosphonic acid and a mixture of two or more of these compounds, in particular alkali metal hypophosphite.

10. The process as claimed in any one of the preceding claims, **characterized in that** the expandable composition also contains up to 30% by weight, preferably up to 20% by weight, in particular up to 10% by weight, relative to the dry weight of the total expandable composition, of one or more inorganic or organic fillers.

11. A polyester foam capable of being obtained by the process as claimed in any one of the preceding claims.

12. The polyester foam as claimed in claim 11, **characterized in that** it has a density of between 20 and 80 kg/m³, preferably between 25 and 50 kg/m³, in particular between 27 and 48 kg/m³.

13. The polyester foam as claimed in claim 11 or 12, **characterized in that** it has a closed porosity.

14. The solid foam as claimed in one of claims 11 to 13, **characterized in that** the mean diameter of the pores determined by X-ray tomography is between 100 and 800 µm.

15. The use of a composition containing
- a polyol component comprising at least one element selected from glycerol, diglycerol and glycerol oligomers,
- a polyacid component comprising citric acid,
- a surfactant selected from alkyl polyglycosides and the mixtures of an anionic surfactant and a cationic surfactant, and
- an esterification catalyst,
as expandable and thermosetting composition for the manufacture of an insulating product of foam type.
